# NEUE EUROPÄISCHE PATENTSCHRIFT

(11) **EP 0 826 128 B2**
(45) Veröffentlichungstag und Bekanntmachung des Hinweises auf die Entscheidung über den Einspruch: **01.06.2005**
(45) Hinweis auf die Patenterteilung: 24.05.2000
(21) Anmeldenummer: 96914917.8
(22) Anmeldetag: 15.04.1996
(51) Int. Cl.: F16N 11/08

(54) **EINRICHTUNG ZUR AUTOMATISCHEN SCHMIERSTOFFABGABE**
AUTOMATIC LUBRICANT-DISPENSING DEVICE
DISPOSITIF DE DISTRIBUTION AUTOMATIQUE DE LUBRIFIANT

(30) Priorität: 15.04.1995 DE 19514232; 20.07.1995 DE 19526461; 07.08.1995 DE 19528914
(43) Veröffentlichungstag der Anmeldung: 04.03.1998
(73) Patentinhaber: Perma-Tec GmbH & Co. KG, 97717 Euerdorf (DE)
(72) Erfinder: RAAB, Björn, D-27572 Bremerhaven (DE)
(74) Vertreter: Albrecht, Rainer Harald, Dr.-Ing.
(86) Internationale Anmeldenummer: PCT/EP1996/001577
(87) Internationale Veröffentlichungsnummer: WO 1996/033366

(56) Entgegenhaltungen:
- WO-A-89/08800
- DE-A- 4 330 793
- DE-B- 1 256 001
- DE-U- 8 900 076
- DE-U- 9 214 096
- DE-U- 9 309 575
- TW-A- 80 214 553
- US-A- 5 271 528
- BETRIEBSTECHNIK, Bd. 32, Nr. 12, 1.Dezember 1991, Seite 22 XP000239948 "SICHER UND SPARSAM"

## Beschreibung

Die Erfindung betrifft eine Einrichtung zur automatischen Schmierstoffabgabe mit einem in einem Zylinder angeordneten Kolben und einem damit verbundenen Antriebsmittel, das in einem an den Zylinder anschließenden Gehäuse angeordnet ist. Eine solche Einrichtung ist aus der DE-PS 43 21 452, DE-U-92 14 096 und TW-A-80 214 553 bekannt. Während in DE-PS 43 21 452 und TW-A-80 214 553 eine Lösung vorgeschlagen wird, bei der Schmiermittel mittels eines Druckkolbens aus dem Zylinder direkt gedrückt wird, sich also das Schmiermittel unmittelbar selbst im Zylinder befindet, wird bei der Lösung nach DE-U-92 14 096 vorgeschlagen, eine Schmiermittelpackung in den Zylinder einzusetzen und mittels eines Kolbens auszupressen.

Der aus DE-PS 43 21 452 bekannte Schmierstoffgeber wird erst durch Einstellen der Spendezeit mit einer Staffelung im gewünschten Zeitabstand durch elektronische Steuerung aktiviert, was insbesondere dann nachteilig ist, wenn der Schmierstoffgeber an Stellen untergebracht ist, die nur schwer zugänglich sind und ein Einstellen der Spendezeit kaum erlauben. Darüber hinaus ist die Ausbildung der Mittel zur Einstellung der Spendezeit bei dem Gerät aufgrund ihrer häufigen einmaligen Nutzung wenig wirtschaftlich.

Die aus TW-A-80 214 553 bekannte Einrichtung zur automatischen Schmierstoffabgabe wird mit Batterien betrieben, die in ein Batteriefach des Gehäuses eingesetzt werden. An der Außenseite des Gehäuses ist ein von außen zugänglicher Schalter vorgesehen, dessen Schalterstellungen mit "on/off" bezeichnet sind. Die in Intervallen abgegebene Schmierstoffmenge ist mittels einer ebenfalls an der Gehäuseaußenseite zugänglichen Wählscheibe einstellbar. Die ordnungsgemäße Abgabe der Schmierstoffmenge ist nicht kontrollierbar. Wenn sich das Fließverhalten des Schmierstoffes z. B. bei tiefen Temperaturen ändert oder der Schmierstoffauslass verschmutzt ist, ist eine ordnungsgemäße Abgabe der vorgewählten Schmierstoffmengen nicht sichergestellt.

Der in DE-U-92 14 096 beschriebene Schmierstoffgeber kann unter ungünstigen Umweltbedingungen Explosionen verursachen.

Es ist daher Aufgabe der vorliegenden Erfindung, bei einer Einrichtung zur automatischen Schmierstoffabgabe mit einem in einem Zylinder angeordneten Kolben und einem damit verbundenen Antrieb die dem Stand der Technik anhaftenden Nachteile zu vermeiden.

Erfindungsgemäß wird dies mit einer Einrichtung zur automatischen Schmierstoffabgabe nach Anspruch 1 erreicht. Vorteilhafte Weiterbildungen der Erfindung sind in den Unteransprüchen beschrieben.

Der Spritzwasserschutz kann durch eine entsprechende Abdichtung des Einschalters erreicht werden, wodurch gleichzeitig auch die gesamte Einrichtung zur automatischen Schmierstoffabgabe explosionsgeschützt ist. Gemäß einer bevorzugten Ausführung der Erfindung besitzt der Einschalter keine Ausschaltfunktion. Nach der Aktivierung des Einschalters ist eine Ausschaltung der Einrichtung nur noch durch Abschaltung der Energieversorgung möglich. Der bevorzugte Verzicht auf eine Ausschaltfunktion ist unproblematisch, weil der automatische Schmierstoffgeber praktisch nie ausgeschaltet werden muss, sondern aufgrund einer voreingestellten Schmierstoffabgabemenge pro Tag oder sonstiger Zeiteinheit so lange in Betrieb bleibt, bis sämtlicher Schmierstoff aus dem Zylinder ausgegeben worden ist.

Der Einschalter ist vorzugsweise als zylindrischer Stift ausgeführt, der mit einem als Sprungkontaktscheibe ausgebildeten Kontaktmittel zusammenwirkt. Die Sprungkontaktscheibe ist auf einer Platine zusammen mit den anderen elektrischen Bauteilen zur Steuerung der Schmierstoffabgabe angeordnet. Die Sprungkontaktscheibe weist eine kalottenähnliche konvexe Querschnittsform auf, solange die Einrichtung noch nicht aktiviert ist. Der Sprungkontaktscheibe liegt der Einschalter gegenüber, der in einer Öffnung der Gehäusewandung der Einrichtung angeordnet ist. Wird der als Aktivierungsstift ausgebildete Einschalter in das Gehäuse eingedrückt, so drückt der vordere Teil des Aktivierungsstiftes bzw. des Einschalters die konvexe Form der Sprungkontaktscheibe in eine konkave Form und die so gebogene Kontaktscheibe, welche elektrisch leitend ausgeführt ist, berührt gleichzeitig zwei unterhalb der Kontaktscheibe angeordnete Kontakte, durch die die Einrichtung bei Kontaktierung gestartet wird.

Vorzugsweise weist der Aktivierungsstift zwei umlaufende Vorsprünge auf, die in einem Abstand entsprechend der Wandstärke des Gehäuses zueinanderliegen. Bei Nichtaktivierung liegt einer der Vorsprünge außenseitig und der andere Vorsprung innenseitig des Gehäuses. Bei der Aktivierung wird der außenseitig liegende Vorsprung durch die Öffnung des Gehäuses gedrückt bis der vormals außenseitige liegende Vorsprung innenseitig liegt und eine Zurückbewegung des Aktivierungsstifts aus dem Gehäuse heraus verhindert. Dichtungsmittel, die unterhalb des Kopfes des Aktivierungsstifts angeordnet sind, liegen nach dem Hineindrücken des Aktivierungstifts außenseitig am Gehäuse an und dichten das innere des Gehäuses gegen den Außenbereich des Gehäuses ab. Eine weitere Abdichtung des Gehäuses wird durch den Vorsprung erreicht, der innenseitig an der Gehäuseinnenwandung liegt.

Ferner ist es zweckmäßig, wenn die Einrichtung einen Mikroprozessor und einen damit verbundenen Speicher aufweist und die Einrichtung mittels dieser Mittel auf eine bestimmte Mengenabgabe pro Zeit voreinstellbar ist, welche durch den Einschalter lediglich noch ausgelöst werden kann.

Zur Beobachtung der Entleerung der erfindungsgemäßen Einrichtung ist die Zylinderwand wenigstens teilweise aus einem transparenten Material, so daß die Silhouette des Kolbens oder des Dichtungskörpers von außen her zu sehen ist. Längs der Zylinderhauptachse ist darüber hinaus eine Skalierung in Form von alphanumerischen oder abstrakten Zeichen vorgesehen, so daß eine genaue Abschätzung über die Entleerung des Schmierstoffes im Zylinder angegeben werden kann. Eine solche Anzeigevorrichtung ist sehr einfach in der Herstellung und in der Ablesung und darüber hinaus sehr genau. Gerade wenn die Zylinderwandung aus Kunststoff ist, läßt sich die Transparenz bzw. Durchsichtigkeit der gesamten Zylinderwandung sehr einfach herstellen.

Zur verbesserten Ablesung ist es sinnvoll, wenn der obere Kolbenrand oder der Dichtungskörper mit einer gut sichtbaren Farbe, z.B. Signalfarbe, versehen ist.

Es kann zweckmäßig sein, die Einrichtung von Winter- auf Sommerbetrieb umzuschalten und entsprechende Mengen/Zeit-Voreinstellungen in einem nicht flüchtigen Speicher zu speichern. Durch einen weiteren Schalter kann die Umschaltung ausgelöst werden. Damit wird die optimale Schmierstoffversorgung durch Anpassung an die üblichen Außentemperaturen zur Winter- bzw. Sommerzeit erreicht.

Als Antriebsmittel für den automatischen Schmierstoffgeber kann ein elektrischer Gleichstrom- oder Wechselstrommotor dienen, wie er als solcher im Elektromaschinenbau häufig zur Anwendung kommt.

Besonders vorteilhaft ist jedoch die Verwendung eines Schrittmotors, welcher den Kolben innerhalb des Zylinders des Schmierstoffgebers antreibt. Der Vorteil liegt besonders darin, daß ein Schrittmotor sich für den erfindungsgemäßen Zweck besser ansteuern läßt, weil er in Abhängigkeit von elektrischen Signalen, z. B. von einer Anzahl von elektrischen Impulsen, gradgenau und somit gegenüber Temperatureinflüssen unabhängiger reagiert, als dies bei z. B. Gleichstrommotoren der Fall ist. Die Verwendung eines Schrittmotors erlaubt damit eine insgesamt einfachere Ansteuerung des Antriebs von einer Steuerplatine, die vor allem eine Impulszähleinrichtung und eine Einrichtung aufweist, die in Abhängigkeit der vorliegenden elektrischen Impulse die Schrittweite des Motors steuert. Auf diese Art und Weise läßt sich auch das Abschalten des Schrittmotors bewirken, wenn dieser den Kolben bis in den Ausgabebereich des Zylinders gedrückt hat. Dies erfolgt dadurch, daß in einem Speicher eine Anzahl von Schrittmotor-Steuer-Impulsen vorgegeben wird, und sobald diese Anzahl erreicht wird, der Schrittmotor bzw. der Schmierstoffgeber abgeschaltet wird. Somit besteht die Abschaltungseinrichtung des Schrittmotors aus einem Vergleicher bzw. einer Steuereinheit mit einem Vergleichsprogramm, welches die Anzahl der bereits eingestellten Impulse mit der gespeicherten Maximal-Impulszahl vergleicht und in Abhängigkeit davon ein Steuersignal an den Schrittmotor weiterleitet und eine Weiterbewegung des Schrittmotors um eine bestimmte Schrittanzahl freigibt oder diesen abschaltet.

Als Impulserzeugungseinrichtung kann ein Impuls-/Steuersignalgenerator dienen, welcher zeitabhängig, z. B. 10 Impulse pro Tag oder abhängig vom Bedarf der zu schmierenden Maschineneinheit Impulse erzeugt, so daß bei maschinenunabhängigen Betrieb der Schrittmotor und damit der Kolben innerhalb einer bestimmten Zeiteinheit eine bestimmte Schrittauslenkung erfährt und bei maschinengebundener Ansteuerung der Impulsgenerator die nötige Anzahl von Impulsen auf Bedarf erzeugt.

Nachfolgend wird die Erfindung anhand eines Ausführungsbeispiels näher erläutert. In der Zeichnung stellen dar:
- Fig. 1: einen Teilquerschnitt/Teilaufsicht auf eine erfindungsgemäße Einrichtung zur automatischen Schmierstoffabgabe;
- Fig. 2: ein Querschnitt durch die Einrichtung in Fig. 1
- Fig. 3: ein Teilausschnitt aus Fig. 1 bei Nichtaktivierung;
- Fig. 4: ein Teilausschnitt aus Fig. 1 bei Aktivierung der Einrichtung;
- Fig. 5: eine besondere Ausführung des Antriebs als Teleskopspindel mit getriebenem Zahnrad im unausgefahrenen und ausgefahrenen Zustand;
- Fig. 6: Darstellungsansicht einer Anzeige;
- Fig. 7: Prinzipblockschaltbild der elektrischen Ansteuerung des Schmierstoffgebers; und
- Fig. 8: eine weitere Prinzipdarstellung des Schmierstoffgebers im Querschnitt
- Fig. 9: Querschnitt durch den Zylinder
- Fig. 10a: Querschnitt durch das Gehäuse
- Fig. 10b: Querschnitt durch das Gehäuse entlang der Linie E-E in Fig. 11a
- Fig. 11a: Aufsicht auf den Zylinder
- Fig. 11b: Querschnittausriß gemäß 12a
- Fig. 12: Stabilisatorelement

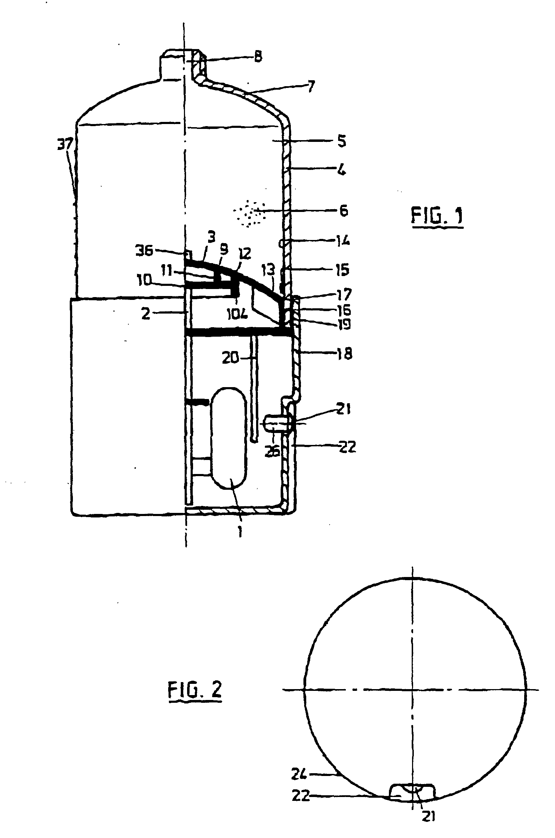

Fig. 1 zeigt ein elektrisch betriebenen automatischen Schmierstoffgeber mit einem elektromotorischen Antrieb, der über eine Vorschubstange 2 oder eine Spindel einen Kolben 3 antreibt. Zur Energieversorgung des Antriebs dient eine Batterie 1. Die Art und Ausgestaltung des Antriebs selbst ist vergleichbar der in DE-PS-43 21 452 oder DE-U-92 14 096 offenbarten Lösungen. Der Kolben 3 liegt innerhalb eines Zylinders 4, der in seinem Innenraum 5 ein Schmierstoff 6 oder ein anderes flüssiges oder gasförmiges Medium aufnimmt. Im Zylinderkopfbereich 7 ist ein Auslaß 8 zur Abgabe des Schmierstoffes bzw. des flüssigen Mediums vorgesehen.

Der Kolben weist im Querschnitt eine konvexe Form 9 auf, der die Form des Zylinders im Zylinderkopfbereich 7 entsprechend angepaßt ist. Rückseitig weist der Kolben eine Spindelplatte 10 auf, an die die Spindel 2 zum Vortrieb des Kolbens angreift. Die Spindelplatte erstreckt sich über einen Teilbereich der Rückseite des Kolbens und ist über einen oder mehrere Stege 11 mit dem Kolbenboden 12 des Kolbens 3 verbunden und ferner über ein Zentrierelement 104 zentriert.

Zwischen dem Rand 13 des Kolbens 3 und der Zylinderinnenwandung 14 des Zylinders 4, ist ein Spalt 15 ausgebildet, der ein Verfahren des Kolbens 3 innerhalb des Zylinders 4 ermöglicht. Der Spalt ist so klein, daß ein Durchtritt des Schmierstoffes durch den Spalt nicht möglich ist. Zur Verbesserung der Abdichtung liegt auf dem Kolbenrand 13 über dem Spalt 15 als Dichtungskörper 16 eine einstückige Dichtlippe 17 auf dem Kolbenrand auf. Die Dichtungslippe 17 erhebt sich vom Kolbenrand zur Zylinderinnenwandung, so daß bei starkem Druck im Innenraum 5 des Zylinders 4 die Dichtungslippe 17 an die Zylinderinnenwandung 14 und auf dem Kolben 3 gedrückt wird.

Während der Kolben im Zylinder angeordnet ist, sind die Mittel zum Antrieb des Kolbens 3 im an dem Zylinder 4 anschließenden Gehäuse 18 angeordnet, welches den Zylinder im Überlappungsbereich 19 umfaßt.

Das Gehäuse 18 und der Zylinder 4 sind lösbar, z.B. durch ein Gewinde, miteinander verbunden. Dies erlaubt eine Trennung des geleerten Zylinders von dem Gehäuse und gleichzeitig die Arretierung eines gefüllten Zylinders von einem Gehäuse 18, nachdem der Kolben 3 in seine Ausgangsstellung zurückgefahren ist. Wird der Zylinder mit dem Gehäuse unlösbar verbunden, so ist es möglich, nach Aufhebung einer Rückbewegungssperre, welche bei Betrieb des automatischen Schmierstoffgebers die Rückbewegung des Kolbens in seine Ausgangsstellung verhindert, durch Einfüllen von Schmierstoff in den Zylinder über die Ausgangsöffnung 8, um den automatischen Schmierstoffgeber wieder zu befüllen und betriebsbereit zu machen.

Ferner ist es sinnvoll, das Innenleben des Gehäuses, also Antrieb und elektrische Teile, mit diesem lösbar zu verbinden, so daß nach dem Verbrauch des Schmierstoffs Zylinder und Gehäuse, vorzugsweise auch der Kolben 3, vom Antrieb und dessen elektronischen Ansteuerungsteilen getrennt und einer gezielten Entsorgung zugeführt werden können, die vor allem dann einfach ist, wenn Gehäuse 18, Zylinder 4 als auch Kolben 3 aus Kunststoff bestehen und somit nach dem Verbrauch des Schmierstoffes und der Ablösung vom Antrieb und dessen elektronischen Steuerungsteilen einem Kunststoffrecycling zugeführt werden können. Für den Neuaufbau eines neuen Schmierstoffgebers kann dann der Antrieb und dessen elektronische Steuerung wiederverwendet werden, was umwelttechnisch sinnvoll und wirtschaftlich sehr vorteilhaft ist aufgrund der mehrfachen Benutzbarkeit des Antriebs und dessen elektronischen Ansteuerungsteilen. Dadurch wird der Aufwand zur Herstellung des automatischen Schmierstoffgebers insgesamt verringert. Außerdem wird gemäß dem Verursacherprinzip die Entsorgung des Schmierstoffgebers demjenigen überlassen, welcher auch den Schmierstoffgeber herstellt, wodurch die Entsorgungskapazitäten bei dem Benutzer des Schmierstoffgebers verringert werden.

Sind Gehäuse und Zylinder lösbar miteinander verbunden, kann ein leerer Zylinder durch einen neu gefüllten Zylinder einfach ausgetauscht werden und der geleerte Zylinder ist dann der Kunststoffwiederverwertung zuführbar. Die unterschiedlichen Prinzipien und Möglichkeiten der Wiederverwertbarkeit einzelner Bauteile des automatischen Schmierstoffgebers werden später beschrieben.

Ferner weist der Schmierstoffgeber im Gehäuse 18 eine Platine 20 auf, auf dem ein beispielsweise als ASIC ausgebildeter Mikroprozessor 54 und Speicher sowie weitere Steuerungseinrichtungen angeordnet sind, um den Antrieb des Kolbens entsprechend zu steuern.

Die Elektronik ist durch Speicherung der entsprechenden Werte so voreingestellt, daß der automatische Schmierstoffgeber pro Zeiteinheit, z.B. pro Tag, eine bestimmte Menge an Schmierstoff, z.B. 2 oder 4 g, abgibt. Diese voreingestellte Abgabe wird mittels des Einschalters ausgelöst und kann anschließend nur noch durch Abschaltung der Versorgungsspannung einer in der Einrichtung angeordneten Batterie erfolgen. Normalerweise jedoch ist eine Abschaltung nicht notwendig und der Schmierstoffgeber arbeitet bis zur vollständigen Entleerung.

In Fig. 2 ist eine Aufsicht auf den hinteren Teil des Schmierstoffgebers gezeigt. Dabei ist zu erkennen, daß der Einschalter 21, der nachfolgend noch näher erläutert wird, in einer Versenkung 22 des kreiszylinderischen Gehäuses 18 liegt und somit den Außenumfang 24 des Gehäuses 18 nicht überragt. Damit liegt der Einschalter 21 geschützt innerhalb der Gehäuseform und bietet keine Angriffsfläche für an den Schmierstoffgeber heranragende Gegenstände.

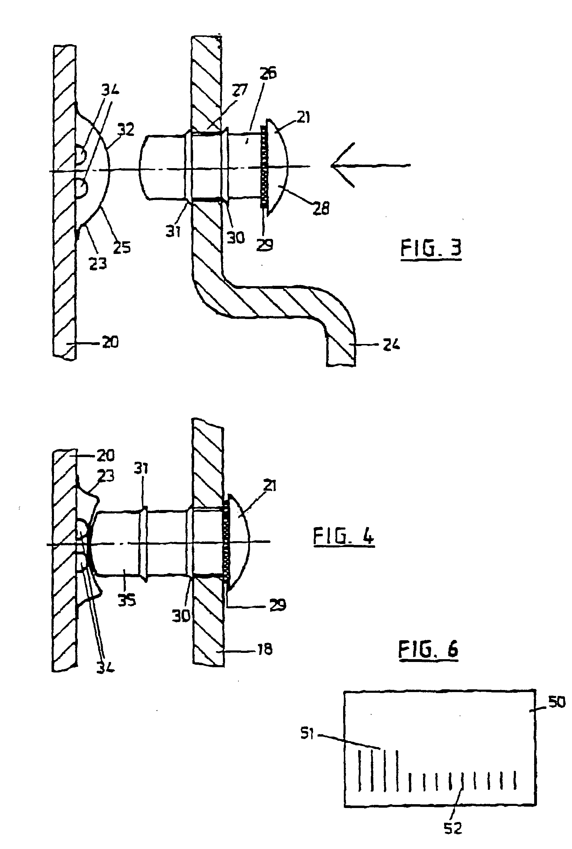

In Fig. 3 ist ein vergrößerter Ausschnitt des Einschalters 21 und dessen Zusammenwirken mit einem Kontaktmittel 25 im nichtaktivierten Zustand gezeigt. Der Einschalter besteht aus einem zylindrischen Stift 26, der in einer Öffnung 27 des Gehäuses 18 steckt. Der Stift weist einen Stiftkopf 28 auf, dessen Durchmesser größer ist als der Durchmesser der Öffnung 27. Unterhalb des Stiftkopfes ist ein Dichtring 29 angeordnet. Außerdem weist der zylindrische Teil des Stifts 26 zwei in einer Richtung abgeschrägte Vorsprünge 30 und 31 auf, deren Abstand zueinander der Wandstärke des Gehäuses 18 entspricht. Durch die umlaufenden Vorsprünge 30 und 31, deren Durchmesser größer ist als der der Öffnung 27, wird eine Vorfixierung des Stifts 26 in der Gehäusewandung erreicht. Durch ihre Abschrägung kann der Stift 26 von außen her in das Gehäuse 18 eingesetzt werden, sobald jedoch der zweite Vorsprung 31 durch die Öffnung 27 durchgesteckt worden ist, läßt sich der Einschalter 21 nur noch unter großer Kraftaufwendung aus der Öffnung 27 herausziehen. Im Gehäuseinnenraum ist dem Einschalter 21 auf der Platine 20 als Kontaktmittel 25 eine Sprungkontaktscheibe 23 zugeordnet, welche im nichtaktiven Zustand über eine konvexe bzw. kalottenartige Wölbung 32 einer metallische Platte verfügt, unterhalb der zwei Kontakte 34 liegen, deren leitende Verbindung eine Einschaltung der Einrichtung auslöst.

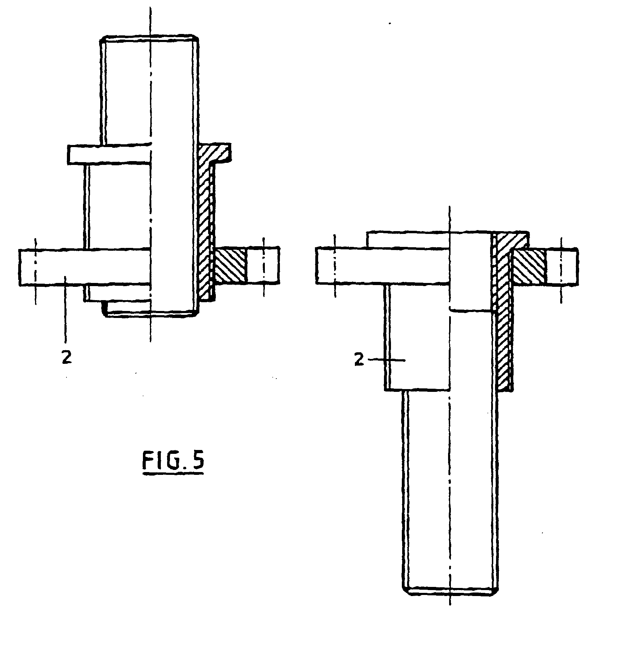

In Fig. 4 ist die Aktivierung des Schmierstoffgebers nach Eindrücken des Stifts 26 in das Gehäuse 18 gezeigt. Durch den vorderen Teil 35 des Aktivierungsstifts wird der gewölbte Teil 32 der Sprungkontaktscheibe 25 soweit heruntergedrückt, daß die Sprungkontaktscheibe die unter ihr liegenden Kontakte 34 gleichzeitig berührt und somit eine elektrische Verbindung zwischen den beiden Kontakten 34 herstellt. Wenn der Stift 26 danach entfernt wird, bleibt es bei der Kontaktierung und somit bei der Einschaltung des Schmierstoffgebers oder bei einer alternativen Ausführungsform ist die Sprungkontaktscheibe wieder in ihre in Fig. 3 gezeigte Ausgangsstellung zurückbewegbar und entkoppelt somit die elektrischen Teile für den Antrieb des automatischen Schmierstoffgebers von der Energieversorgung.

Ferner ist zu erkennen, daß der zweite Vorsprung 30 des Stifts 26 innerhalb des Gehäuses 18 liegt und ein Herausziehen des Einschalters 21 verhindert. Gleichzeitig dichtet er aber auch den Innenraum des Schmierstoffgebers nach außen und innen gegen den Außenraum des Schmierstoffgebers ab. Für eine weitere Abdichtung sorgt die Dichtung 29, welche zwischen dem Stiftkopf 28 und der Außenwandung des Gehäuses 18 gepreßt anliegt. Durch die aufgezeigten Dichtungsmaßnahmen wird ein Spritzwasserschutz als auch ein Explosionsschutz erreicht, da das Innere des Gehäuses gegen Beeinflussungen von außen abgedichtet ist als auch das Äußere des Gehäuses gegen auftretende Störungen z.B. Funkenschlag oder elektrische Überschläge abgeschirmt ist. Ein solcher Schutz ist besonders dann notwendig, wenn ein solcher Schmierstoffgeber im Bergwerk eingesetzt wird, wo das Auslösen von Explosionen unbedingt verhindert werden muß.

Fig. 5 zeigt links eine - ein- oder mehrstufige - Teleskopspindel mit getriebenem Zahnrad im unausgefahrenen Zustand, während rechts die Teleskopspindel bis zum Maximalanschlag ausgefahren ist. Der Einsatz einer Teleskopspindel zum Vortrieb des Kolbens hat eine große Platzersparnis zur Folge und stellt darüber hinaus ein sehr genaues Mittel zum Vortrieb des Kolbens dar, weil sich mit einer Teleskopspindel auch kleinste Längenänderungen einstellen lassen.

Um nicht das im Zylinder befindliche Schmiermittel aufgrund eines verringerten Schmiermittelverbrauchs, z.B. bei Abschaltung der zu schmierenden Einheit, einem zu hohen Druck durch den weiteren Vortrieb des Kolbens auszusetzen, hat es sich als sehr vorteilhaft erwiesen, einen mit dem Mikroprozessor gekoppelten Drucksensor 36 vorzusehen, der bei Übersteigen eines bestimmten Drucks im Zylinder die Einrichtung solange abschaltet, bis der Druck unter einem vorgegebenen Wert gesunken ist. Ein solcher Drucksensor 36 kann wie dargestellt innerhalb des Zylinders 4 aber auch im hinteren Bereich des Gehäuses 18 eingesetzt werden, wenn der Drucksensor die auf den Kolben wirkende Kraft messen kann. Vorzugsweise ist der Drucksensor 36 auf dem Scheitelpunkt des Kolbens 3 angeordnet, so daß er bis in den Auslaßbereich 8 des Zylinders beim Vorfahren des Kolbens ragen kann, um auch die letzten Reste des Schmierstoffs aus dem Auslaßbereich zu drücken.

Zur Ablesung des Kolbenvortriebs ist der gesamte Zylinder oder nur ein Teil davon durchsichtig, also transparent, ausgebildet. Dies läßt sich besonders leicht dann erreichen, wenn der Zylinder aus einem Kunststoff oder aus Glas besteht.

Wird der Kolben vorgetrieben, so kann der Betrachter den Kolbenrand oder die Dichtungslippe durch das transparente Zylindergehäuse erkennen und somit eine Abschätzung über den bisherigen Schmiermittelgebrauch vornehmen.

Für eine genauere Bestimmung hat es sich als sehr vorteilhaft erwiesen, wenn der Zylinder im transparten Bereich längs seiner Hauptachse eine Skalierung in Form von alphanumerischen Zeichen oder abstrakten Zeichen wie einfachen Strichen aufweist. Dabei ist es unter Umständen sehr vorteilhaft, daß dem Abstand zwischen den Skalierungszeichen eine bestimmte Menge an Schmiermittelabgabe entspricht und eine entsprechende Zuordnung der abgegebenen Schmiermittelmenge zum Abstand zwischen den Skalierungszeichen auf dem Gehäuse dokumentiert ist. Somit kann der Betrachter sehr schnell die abgegebene Schmiermittelmenge bestimmen bzw. eine Aussage über die noch vorhandene Schmiermittelmenge treffen. Je kleiner der Abstand der Skalierungszeichen zueinander ist, um so genauer ist dabei die Abschätzung.

Da bei einer Voreinstellung der Schmiermittelabgabe auf z.B. 4 g pro Tag die Abgabe stufenweise erfolgt, ist die Abgabeanzeige besonders dann genau, wenn der eingestellten Abgabemenge pro Zeiteinheit ein Skalierungszeichen zugeordnet ist.

Zur verbesserten Ablesung der Abgabe ist es sinnvoll, wenn der Kolbenrand 13 oder die Dichtungslippe 17 in einer auffälligen Farbgestaltung versehen ist, so daß sich ein sehr stark sichtbarer Unterschied zwischen dem Kolbenrand 13 und dem transparenten Material einstellt. Zur schnelleren Erfassung der Ablesung kann es unter Umständen auch zweckmäßig sein, jedes Skalierungszeichen mit einer fortlaufenden Nummer zu versehen, die das Abzählen erleichtert.

Zur Energieversorgung des Schmiermittelgebers kann eine austauschbare Batterie oder ein Akkumulator eingesetzt werden, wie aber auch eine netzabhängige Spannungsversorgung.

Statt mit einer Spindel ist es natürlich auch möglich, den Vortrieb des Kolbens über ein Schneckengetriebe zu erreichen, welches normalerweise einen erheblich höheren Wirkungsgrad als eine Spindel aufweist, jedoch manchmal etwas mehr Platz benötigt.

Durch die Voreinstellung der Dosierung kann auf die bei Schmiermittel bislang immer vorgesehenen Einstellmittel zur Dosiermengenregelung verzichtet werden, was den gesamten Aufbau des Schmierstoffgebers erleichtert und eine zuverlässigere Abgabe ermöglicht.

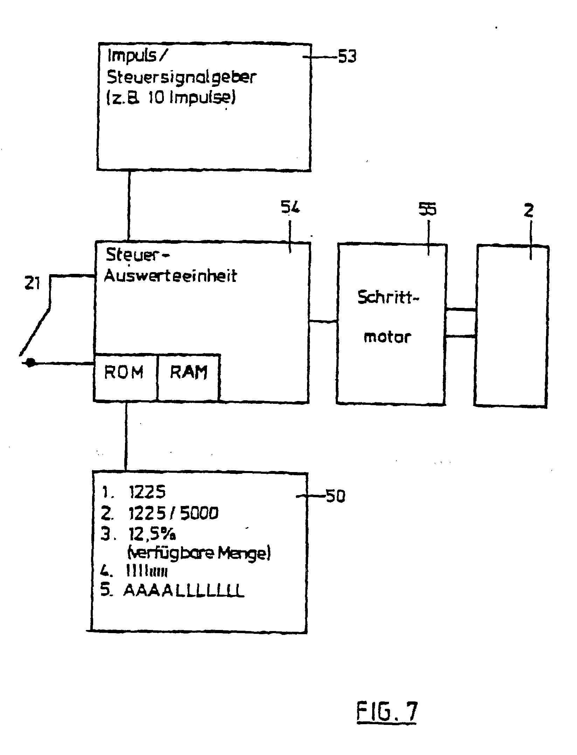

Es ist zweckmäßig und vorteilhaft als Antrieb einen Schrittmotor 55 zu verwenden, der in Abhängigkeit von zugeführten elektrischen Impulsen bzw. Signalen die Spindel 2 bzw. den Kolben 3 vorantreibt. Zu diesem Zweck ist auf der Platine 20 ein Impuls-/Steuersignalgeber 53 vorgesehen, welcher innerhalb einer bestimmten Zeiteinheit eine bestimmte Anzahl elektrischer Impulse/Steuersignale erzeugt und diese Signale einer Steuer-Auswerte-Einheit 54 des Schrittmotors 55 zuführt -Fig. 7-. Dadurch wird eine Ansteuerung bzw. ein Antrieb erreicht, der unabhängig von äußeren Einflüssen ist und vor allem die Nachteile einer Temperaturabhängigkeit, die bei Gleichstromantrieben regelmäßig gegeben ist, prinzipiell vermeidet. Auch ist auf diese Art und Weise die Abschaltung des Schmierstoffgebers bzw. des Schrittmotors zu erreichen, indem in der Steuer-Auswerte-Einheit 54 eine Zähler-Auswerte-Einheit vorgesehen ist, die die an den Schrittmotor abgegebenen Steuerimpulse zählt, in einem flüchtigem Speicher RAM zwischenspeichert, und mit einem vorgegebenen Wert "Impuls-Maximalzahl", welche in einem nichtflüchtigem Speicher ROM gespeichert ist, vergleicht. Die "Impuls-Maximalanzahl" entspricht dem maximalen Vortrieb des Kolbens 3 im Zylinder, wenn der Kolben die Zylinderinnenwandung im Zylinderkopfbereich 7 berührt. Die Auswerteinheit vergleicht dann die Zahl der abgegebenen Steuerimpulse mit dem Wert "Impuls-Maximalzahl" und die Steuereinheit 54 schaltet dann, wenn die Anzahl der gezählten Steuerimpulse der Zahl der gespeicherten "Impuls-Maximalzahl" entspricht, den Schrittmotor ab. Wenn die Zahl der gezählten Steuerimpulse unterhalb der "Impuls-Maximalzahl" liegt, wird der Vortrieb der Spindel bzw. des Kolbens um die den abgegebene Steuerimpuls entspechende Schrittweite freigegeben.

Die Einschaltung der Schmierstoffabgabe als solche erfolgt wie oben bereits beschrieben, durch den Einschalter 21, welcher mit der Steuereinheit verbunden ist.

Falls der Schmierstoffgeber mit einer entsprechenden Anzeigeeinheit 50 in Form eines Displays wie in Fig. 6 dargestellt, versehen oder verbunden ist, kann die Anzahl der abgegebenen Zählimpulse und somit ein Maß für abgegebene Schmierstoffmenge bzw. ein Maß für die Restschmierstoffmenge dort angezeigt werden, sei es in absoluten Zahlen, (z. B. 1225), oder prozentual (z. B. 12, 5%) und/oder im Verhältnis zur Gesamtzahl (1225/5000), so daß der Benutzer des Schmierstoffgebers sich stets sehr genau über die Kolbenauslenkung und über die abgegebene bzw. noch verbleibende Schmierstoffmenge im Schmierstoffgeber informieren kann.

Die Anzeige kann auch auf die Art und Weise erfolgen, daß das Display 50 zwei unterschiedliche Arten von alphanumerischen bzw. abstrakten Zeichen aufweist, nämlich eine erste Zeichengruppe, die aus einer Anzahl von ersten Zeichen 51 besteht, wobei die Anzahl der ersten Zeichen der an den Schrittmotor abgegebenen Anzahl von Steuerimpulsen proportional ist und und aus einer zweiten Zeichengruppe besteht, die aus einer zweiten Anzahl 52 von Zeichen besteht, wobei die Anzahl der ersten 51 und zweiten 52 Zeichen der Anzahl der gesamtmöglichen Steuerimpulse proportional und somit ein Maß für die gesamte Schmierstoffmenge ist. Eine solche inkrementelle Anzeige gerade bei einem Schrittmotor als inkrementellen Antrieb ist sehr einfach und genau bezüglich der absoluten Anzeige absoluter und feinster Änderungen der abgegebenen Schmierstoffmenge bzw. der Restschmierstoffmenge.

Für die Endabschaltung des Schrittmotors kann statt eines Drucksensors eine Stromaufnahmeüberwachungseinrichtung vorgesehen werden, welche, sobald ein vorher einprogrammierter maximaler Stromaufnahmewert des Motors überschritten wird, die Elektronik und somit den Schmierstoffgeber abschaltet.

Bei einer maschinenabhängigen Steuerung, d. h. wenn die zu schmierende Maschineneinheit entsprechend ihrem Schmierstoffbedarf Steuersignale an den Schmierstoffgeber abgibt, erlaubt das Display eine sehr genaue Anzeige über die abgegebene Schmierstoffmenge in absoluten Zahlen, d. h. in ml pro Zeiteinheit, woraus das Maschinenwartungspersonal auch weitere Informationen über den Zustand und Verschleiß der zu schmierenden Maschine erhält. Dies erleichtert unter Umständen die Entscheidungsfindung über den Weiterbetrieb der zu schmierenden Maschineneinheit oder die Auswechselung von bestimmten Aggregaten, die kurz vor dem Ausfall stehen.

Um die bei einem Gleichstrommotor abgegebene Schmierstoffmenge kontrollieren zu können, kann auch vorgesehen werden, daß sich auf einem Zahnrad des Getriebes ein als Zapfen ausgebildeter metallischer Vorsprung befindet und sich mit diesem Zahnrad mitdreht. Bei jeder Umdrehung des besagten Zahnrades führt der Weg dieses Zapfens an einer Diode oder an anderen Erkennungsmitteln vorbei, was einen Signalimpuls auslöst. Dieses Signal wird von dem auf der Platine befindlichen Mikroprozessor 54 erfaßt und einem Zähler zugeführt, welcher die von der Diode ausgelösten Signale zählt. Erreicht die von dem Zähler gezählte Signalzahl einen bestimmten Wert der einem Wert entspricht, in dem das Schmierstoffmedium komplett herausgedrückt ist bzw. der Kolben seinen maximalen Vortrieb aufweist, schaltet der Mikroprozessor das Antriebssystem ab.

Beidermaschinenabhängigen Steuerung des automatischen Schmierstoffgebers ist vorgesehen, daß der Schmierstoffgeber berührungslos mittels eines Magnetschalters aktiviert bzw. deaktiviert wird. Dazu ist ein Magnetschalter auf der Platine 20 so angebracht, daß er sich möglichst nahe an der Wandung des Gehäusedeckels befindet. Ferner ist eine Spule auf dem Gehäusedeckel angebracht, die bei Stromfluß den Magnetschalter im Inneren des Gehäuses schaltet und den Antrieb aktiviert bzw. deaktiviert. Liegt an der Spule keine Spannung an, so wird das Antriebssystem deaktiviert. Steht die Spule unter Spannung, so wird das Antriebssystem aktiviert. Die der Spule zugeführten Spannungssignale werden von der zu schmierenden Maschineneinheit geliefert und die berührungslose Steuerung des Antriebs erlaubt die mechanische Entkopplung zwischen spannungsführenden Leitungen außerhalb des Gehäuses von dem Inneren des Gehäuses und vermeidet somit automatisch mögliche Überschlagspannungen. Dadurch ist ein wirksamer Explosions- und Wasserschutz des automatischen Schmierstoffgebers gewährleistet.

Die Spule, vorzugsweise mit Eisenkern in Kunststoff eingegossen, ist so konstruiert, daß sie mit einem einfachen Handgriff in eine hierfür vorgesehene Vertiefung des Gehäuses eingedrückt werden kann und somit vergleichbar dem Stift 21 innerhalb der Kontur des Gehäuses liegt. Durch die wie vorstehend beschriebene Kapselung des Inneren des Schmierstoffgebers gegenüber dem Äußeren wird ein sehr wirksamer und kostengünstiger Explosions- und Spritzwasserschutz des automatischen Schmierstoffgebers erreicht.

Ist der automatische Schmierstoffgeber völlig entleert, so ergeben sich zwei prinzipielle Alternativen zur Weiterverwendung des automatischen Schmierstoffgebers. Deshalb ist es andererseits vorteilhaft, nur die Bauteile auszutauschen, welche einer starken Belastung unterliegen und kostengünstig ersetzt werden können. Dies ist z.B. der Zylinder, das Gehäuse 18 und der Kolben 5, welche bei lösbarer Verbindung mit dem Antrieb und den elektronischen Steuerungsteilen, z.B. der Platine 20, nach der Entleerung des Schmierstoffes hiervon getrennt und einem gezielten Kunststoffrecyceln zugeführt werden.

Sind Gehäuse und Zylinder miteinander lösbar verbunden, so sollte eine Auflösung dieser Verbindung nur mittels eines hierzu geeigneten Sonderwerkzeugs möglich sein, um die mißbräuchliche Auftrennung von Gehäuse und Zylinder mit entsprechenden Folgen zu vermeiden.

Ist ferner das gesamte Innenleben des Gehäuses, insbesondere Antrieb und die elektronischen Steuerungsbauteile, vom Gehäuse lösbar ausgebildet, so kann es auch vorteilhaft sein, wenn die Sprungkontaktscheibe nach Ablösung des Aktivierungsstiftes sich in ihre wie in Fig. 3 dargestellte Ausgangsform zurückbewegen läßt mittels entsprechender Maßnahmen. Alternativ hierzu ist aber auch die Auswechselbarkeit der eingedrückten Sprungkontaktscheibe durch eine noch nicht eingedrückte Sprungkontaktscheibe möglich durch Einsetzen einer neuen Sprungkontaktscheibe in eine entsprechende Fassung auf der Platine 20.

Bei der vorstehend beschriebenen Wiederverwendung des Innenlebens des automatischen Schmierstoffgebers werden Kunststoffteile des Zylinders und des Gehäuses der Entsorgung bzw. dem Recycling zugeführt und somit automatisch von den elektrischen metallischen Teilen des Antriebssystems getrennt. Diese Baukastenweise hat große Vorteile bei der Herstellung des Schmierstoffgebers.

Eine weitere Alternative zur Neuinbetriebnahme des automatischen Schmierstoffgebers ist die, daß eine schaltbare Rückfahrsperre für den Kolben vorgesehen ist, welche bei der Neubefüllung des Zylinders die Bewegung des Kolbens in seine ursprüngliche Ausgangsstellung erlaubt. Dann kann die Befüllung des Zylinders durch Einfüllung von Schmierstoff in den Zylinder über die Ausgangsöffnung 8 erfolgen, wobei mit der Befüllung des Zylinders gleichzeitig der Kolben in seine Ausgangsstellung zurückgedrängt wird.

Je nach Einsatzgebiet und Einsatzort ist mal die eine und mal die andere Alternative zur Wiederverwertung und Neubefüllung des automatischen Schmierstoffgebers vorteilhaft.

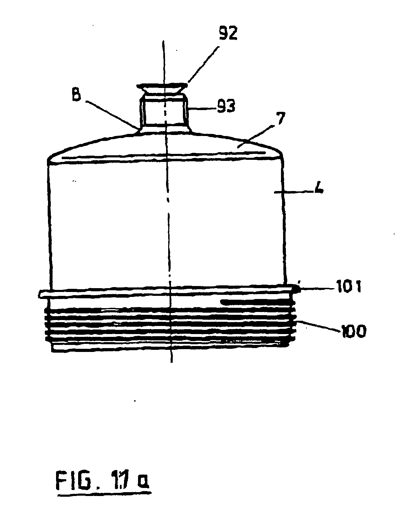

Der Motor zum Vortrieb des Kolbens ist, wie bereits beschrieben, vorzugsweise ein Gleichstrommotor 90, welcher von einer Elektronik angesteuert wird. Die Rotation der Motorwelle (nicht dargestellt) wird über das Getriebe 91, welches vorzugsweise als Zahnradgetriebe ausgeführt ist, untersetzt, z. B. in einem Verhältnis 1:6221. Die Schmierstoffabgabeeinrichtung wird mittels der Batterie 1 mit Energie versorgt, wobei die Batterien vorzugsweise aus drei alkalischen Mignonzellen -Fig. 11a- bestehen, welche nebeneinanderliegend in einem Strumpfschlauch verpackt sind, in Reihe geschaltet sind und komplett mit einem Steckkontakt verkabelt sind. Der Stecker muß bei der Montage nur noch in die auf der Elektronik angebrachten Steckbuchse gesteckt werden (nicht dargestellt).

Die Rotation des Motors wird folgendermaßen in eine lineare Bewegung des Kolbens umgesetzt:

In dem letzten Zahnrad des Getriebes befindet sich eine Gewindebuchse. In dieser Gewindebuchse befindet sich eine gegen Rotation gesicherte Gewinde- bzw. Vorschubstange 2. Dreht sich nun das letzte Zahnrad durch Aktivierung des Motors 90, wird die Gewindestange herausgedreht. Die Steigung des Gewindes ist sehr gering und beträgt vorzugsweise 0,5 mm. Dreht sich also der Motor 6221 mal, so hat das letzte Zahnrad eine ganze Umdrehung gemacht und die Vorschub- bzw. Gewindestange 2 und somit auch der Kolben 3 einen Verfahrweg von 0,5 mm zurückgelegt. Ferner ist auf dem ersten angetriebenen Zahnrad des Getriebes 91 ein schlecht reflektierender Bereich angebracht.

Auf der Elektronik befinden sich Taster, zwei Steckbuchsen - 2 polig für Batterie, 6 polig für Motor und Sensor -, ein Mikroprozessor, ein Zeitquarz und verschiedene Widerstände. Diese Teile sind SMD bestückt.

### Zur Funktionsweise der Elektronik:

Auf dem ersten angetriebenen Zahnrad befindet sich der bereits erwähnte schlecht reflektierende Bereich, z. B. ein schwarzer, matter Kunststoffaufkleber, der erheblich schlechter reflektiert, als das Messing des Zahnrads. In die über dem Zahnrad liegende Getriebeplatte ist ein optischer Infrarotsensor montiert. Dieser Sensor besteht aus einem Sender und einem Empfänger. Der Elektronik ist nun genau vorgegeben, wie oft ein Signal von Sensor kommen muß, um den gesamten Verfahrweg absolviert zu haben. Danach schaltet das System pünktlich nach der voreingestellten Laufzeit ab.

Durch Tests ist ermittelt worden, wie lange es bei 4 Bar Zylinderinnendruck dauert, um X-Signale vom Sensor zu bekommen. Dieses beschreibt den "Worst-Case". Sind in dieser vorgegeben Zeit die X-Signale nicht erkannt worden, schaltet das System ab, da entweder ein technischer Defekt vorliegen muß (Motor, Batterie, Getriebe oder Sensor), oder aber der Druck von 4 Bar überstiegen worden ist (Motordrehzahl verringert sich).

Dies ist von Vorteil, da sich auch die Drehzahl während der Laufzeit ändern kann bzw. ändern wird aufgrund von Temperatur- oder Batteriespannungseinflüssen; jedoch ist gewährleistet, daß immer gleichviel Schmierstoff aus dem Zylinder herausgedrückt wird.

Zur Voreinstellung der Laufzeiten sind zwei Widerstände auf der Elektronik angebracht. Da es vier Positionen gibt, an denen diese Widerstände angebracht werden können, geben sich vier verschiedene Möglichkeiten, die vier verschiedene Laufzeiten bedeuten, z. B. 1, 3, 6, oder 12 Monate.

Der Steuereinrichtung ist vorgegeben, daß bei einen 12-Monatsbetrieb etwa alle 6 Stunden geschmiert werden soll, um auch bei einem Einschichtbetrieb eine Schmierstellenversorgung zu gewährleisten. Bei einem 12-Monatsspender wird also alle 6 Stunden im Zylinder ein Druck aufgebaut. Da die Dauer des Druckaufbaus immer gleich ist, unterscheiden sich die unterschiedlichen Laufzeiten nur dadurch, daß die Pause zwischen dem Spenden unterschiedlich ist. Ein 6-Monatsspender läuft also alle 3 Stunden an, ein 3-Monatsspender alle 90 Minuten, ein 1-Monatsspender alle 30 Minuten. Dies ist vorteilhaft, da es bei kurzer Laufzeit wichtig ist, die Impulse möglichst kurz hintereinander zu kommen, um einem permanenten Druckaufbau möglichst nahe zu kommen. Bei langen Laufzeiten ist dies von untergeordneter Bedeutung.

Der Aktivierungsstift ist wie vormals beschrieben in den Deckel voreingedrückt. Drückt der Benutzer diesen Aktivierungsstift ganz in das Gehäuse der Schmierstoffabgabeeinrichtung hinein, ist das System aktiviert.

Die Kenntlichmachung dem Benutzer gegenüber welche Voreinstellung bei dem zu benutzenden Schmierstoffgeber programmiert ist, erfolgt durch eine Markierung des Aktivierungstiftes, z. B. durch eine Farbmarkierung.

Nach der Aktivierung erfolgt zunächst eine selbsttätige Justierung des Sensors. Da der Elektronik vorgegeben ist, in welcher Zeit X-Signale vom Sensor kommen müssen, wird die Intensität des Sensors so lange verändert, bis der Empfänger dieses Signal optimal empfangen hat. Dies erfolgt dadurch, daß es 1 6 verschiedene Einstellungen des Sensorstroms gibt, was gleichzeitig eine Helligkeitsänderung des Senders bedeutet. Ist die Intensität des Senders zu groß, kann es sein, daß der schwarze Aufkleber den Infrarotstrahl reflektiert. Ist die Intensität zu gering, könnte es auch das Messing des Zahnrads nicht reflektieren. Diese selbsttätige Justierung des Sensors dauert ca. 4 Sekunden. Sollte in dieser Zeit nicht die vorgegebene Anzahl von Signalen erkannt werden, läuft das System nochmals 4 Sekunden, ohne sich allerdings nochmal zu Justieren. Schaltet das System nach 4 Sekunden ab, arbeitet der Sensor optimal, das System ist in Ordnung. Läuft das System aber überhaupt nicht oder 8 Sekunden lang, liegt ein Defekt vor.

Die Schmierstoffmengenabgabe wird nach der Lehre aus der DE-U-9214096 durch eine vorgegebene Einstellung der Dauer der Schmiermittelabgabe beeinflußt. Dabei handelt es sich um eine open-loop-Steuerung. Bei dem erfindungsgemäß beschriebenen Schmierstoffgeber dagegen wird die Schmierstoffmenge direkt, und nicht über eine Zeitdauer überwacht. Dazu wird das abgegebene Schmiermittelvolumen über die zuvor beschriebene Elektronik gemessen und die Schmiermittelzufuhr nach Abgabe eines vorgegebenen Volumens -dies entspricht dem entsprechenden Vorschubweg- gestoppt. Das Volumen der abgegebenen Schmiermittelmenge wird also über die Anzahl von Motorumdrehungen bzw. Signalimpulse gemessen. Es handelt sich hierbei um einen geschlossenen Regelkreis, der sich wesentlich von der open-loop-Steuerung DE-U-9214096 unterscheidet.

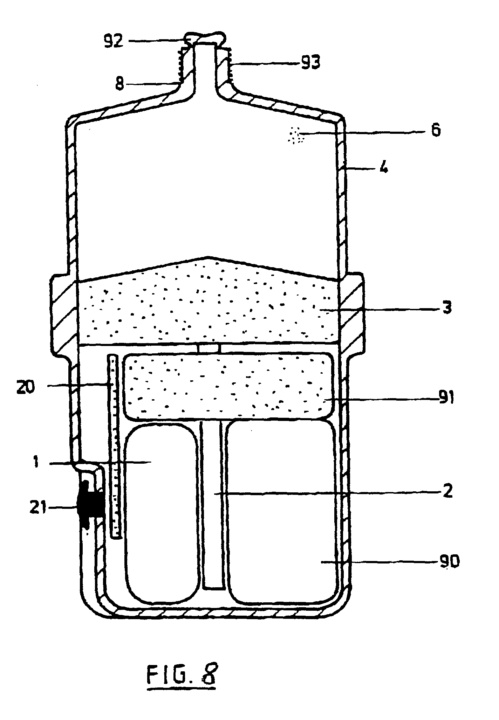

Fig. 8 zeigt eine weitere Prinzipdarstellung der erfindungsgemäßen Schmierstoffabgabeeinrichtung mit Batterien 1 zur Energieversorgung, einer Vorschubstange 2, welche von einem Motor 90 vorgetrieben wird und bei dem ein Getriebe 91, vorzugsweise ein Untersetzungsgetriebe zwischen der Vorschubstange 2 und dem Motor 90 angeordnet ist. Die Vorschubstange ist mit dem Kolben 3 verbunden, welcher innerhalb eines Zylinders 4 mit einer transparenten Zylinderwandung mit zuvor beschriebener integrierter Skala angeordnet. In dem Zylinder befindet sich Schmierstoff 6, welcher über eine Abgabeöffnung 8 ausgebbar ist. Im noch nicht betriebsfertigen Zustand nach der Herstellung des Schmierstoffgebers ist die Abgabeöffnung 8 mit einer mit der Zylinderwandung bzw. der Abgabeöffnung 8 einstückig verbunden Verschlußkappe 92 versehen. Vor Ingebrauchnahme des Schmierstoffgebers muß die Verschlußkappe 92 abgetrennt werden, z. B. durch Schneiden. Ferner ist der Abgabebereich des Zylinders außenseitig mit einem Außengewinde 93 versehen, um in eine Schmierstelle mit entsprechenden Innengewinde eingeschraubt zu werden.

Des weiteren ist der zuvor beschriebene Einschalter 21 sowie die diesem Einschalter 21 gegenüberliegende Platine 20 mit der darauf befindlichen Steuerelektronik angedeutet.

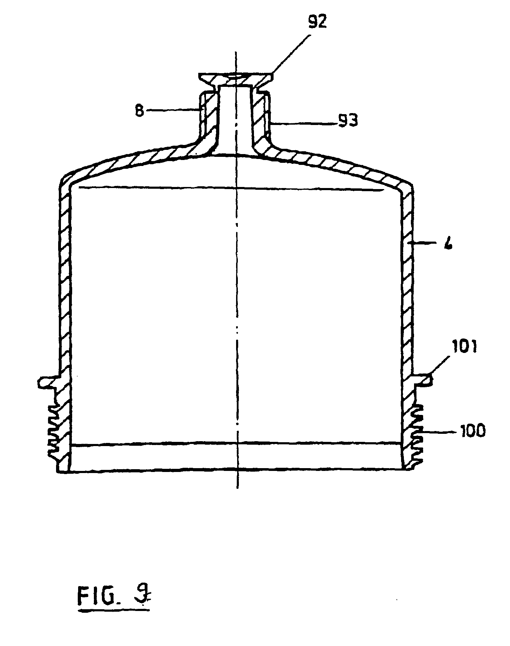

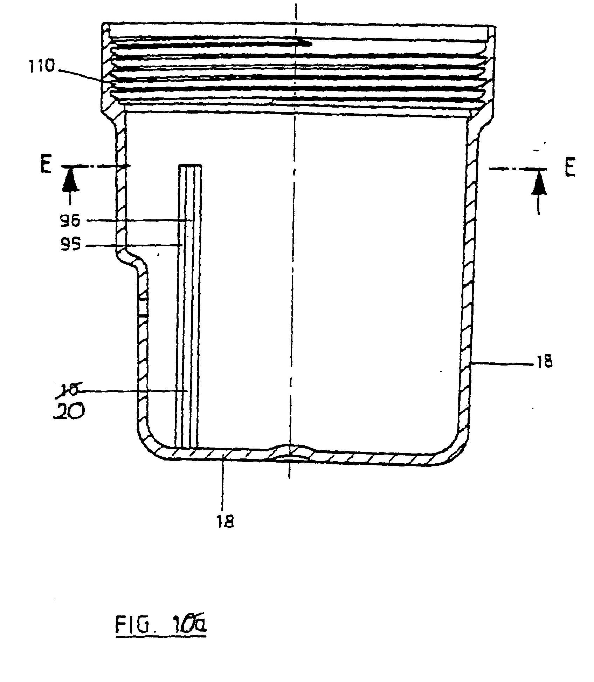

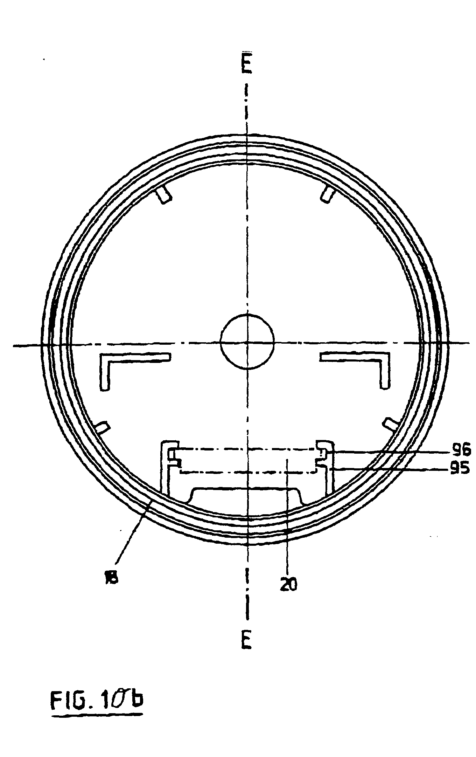

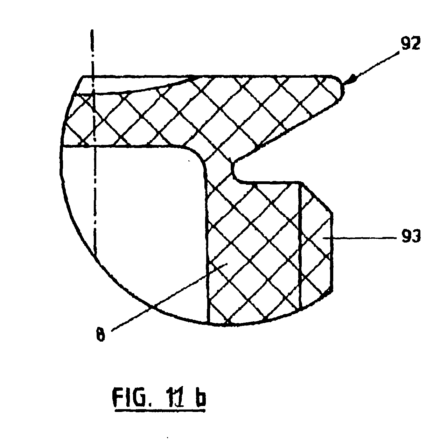

Vorzugsweise überragt die Verschlußkappe 92 in ihrem Außenumfang das Außengewinde 93, so daß ein Einschrauben des Außengewindes in eine Schmierstelle nur nach vorheriger Ablösung der Verschlußkappe möglich ist. Eine solche Ausführungsform ist in den Fig. 9, 11a und 11b dargestellt. In Fig. 9 ist ferner ein Gewinde 100 gezeigt, welches zur Verschraubung mit einem entsprechenden Gegengewinde des Gehäuses -siehe Fig. 10a- dient. Vorzugsweise ist der Zylinder nach der Verschraubung mit dem Gehäuse nicht mehr von diesem lösbar. Eine von der Zylinderwand abweisende Umrandung 101 dient zur besseren Abdichtung und Fixierung des Schraubverschlusses.

Fig. 10a zeigt in einer weiteren Ausführungsform den Gehäuseteil 18 der Schmierstoffabgabeeinrichtung, in dem Batterien 1, die Steuerelektronikplatine 20 und die anderen Antriebsteile untergebracht sind. Wie dargestellt liegt die Steuerplatine 20 in einer Führung 95 zur mechanischen Stabilisierung der Platine. Die Führung 95 besteht vorzugsweise aus einer im Gehäuse 18 ausgebildeten Nut 96. Ferner ist am Verbindungsanschluß zum Zylinder mit dem Schmierstoff ein Innengewinde 110 zu sehen, welches mit dem Außengewinde 100 -siehe Fig. 9- des Zylinders 4 verbindbar ist. Eine weitere Darstellung des Gehäuses 18 ist in Fig. 10b gezeigt, jedoch aus einer um 90 Grad gedrehten Perspektive.

Fig. 11a zeigt in einer weiteren Aufsicht den Zylinder der Schmierstoffabgabeeinrichtung mit aufgebrachten Skalierungsmarken, so daß der Benutzer den Füllstand der Schmierstoffabgabeeinrichtung ersehen kann.

Fig. 11b verdeutlicht noch einmal, daß die Verschlußkappe 92 einen größeren Außendurchmesser aufweist als das Außengewinde 93, so daß ein Einschrauben des Außengewindes in eine Schmierstelle nur nach vorheriger Ablösung der Verschlußkappe 92 möglich ist, welche mit dem Ausgabebereich des Schmierstoffgebers einstückig verbunden ist.

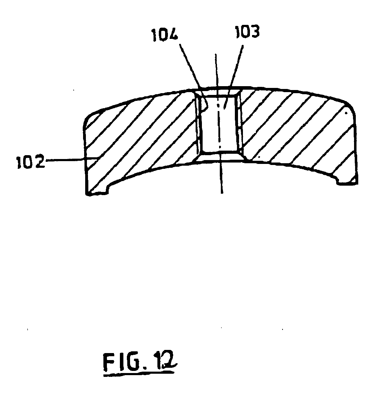

Fig. 12 zeigt ein Stabilisatorelement 102 mit einer Öffnung 103, welches mit einem Innengewinde 104 zur Aufnahme des Schmierstoffgebers mit dessen Außengewinde 93 versehen ist. Das Stabilisatorelement kann auf ein Außengewinde einer Schmierstelle aufgeschraubt werden und auf der anderen Seite die Schmierstoffabgabeeinrichtung aufnehmen. Durch die Konturanpassung des Stabilisatorelements 102 an die Außenkante des Schmierstoffgebers wird eine formflüssige Verbindung des Stabilisatorelemts mit ermöglicht. Durch das Stabilisatorelement kann ein Wegbrechen des Gewindes 93, insbesondere bei starken Vibrationen, verhindert werden.

Besteht das Stabilisatorelemt aus einem elastischen Medium, kann auch die Schmierstoffabgabeeinrichtung mit der Schmierstelle direkt verschraubt werden und das Stabilisatorelement wird dann zusammengedrückt und sorgt so für eine stabile Lage der Schmierstoffabgabeeinrichtung zur Schmierstelle.

## Patentansprüche

1. Einrichtung zur automatischen Schmierstoffabgabe mit
einem in einem Zylinder (4) angeordneten Kolben (3),
einem mit dem Kolben (3) verbundenen elektromotorischen Antriebsmittel (1), das in einem an den Zylinder (4) anschließenden Gehäuse (18) angeordnet ist,
einem Mikroprozessor sowie einem damit verbundenen Speicher (RAM, ROM),
Erkennungsmittel zum mittelbaren oder unmittelbaren Erkennen des Vortriebs des Kolbens und/oder der Bewegung des elektromechanischen Antriebs und
einem Einschalter (21), welcher in einer Öffnung (27) des Gehäuses (18) angeordnet ist,
wobei der Einschalter Spritzwasser- und/oder Explosionsschutz gewährt und seine Kontur im eingeschalteten Zustand in einer Versenkung (22) der Schmierstoffabgabeeinrichtung liegt, wobei der Mikroprozessor auf eine bestimmte Mengenabgabe pro Zeit voreinstellbar ist, welche durch den Einschalter (21) auslösbar ist, wobei die Erkennungsmittel beim Vortrieb des Kolbens oder beim Betrieb des Antriebs Signalimpulse erzeugen, die einer Zähleinrichtung zugeführt werden, und wobei Vergleichsmittel vorgesehen sind, die die Zahl der gezählten Signalimpulse mit einer vorgegebenen, gespeicherten Wertezahl vergleichen.

2. Einrichtung nach Anspruch 1, **dadurch gekennzeichnet, dass** der Einschalter (21) Dichtungsmittel (29) aufweist, die ein Eindringen oder Heraustreten von Medien in oder aus der Einrichtung verhindern.

3. Einrichtung nach Anspruch 1 oder 2, **dadurch gekennzeichnet, dass** der Einschalter zylinderförmig ausgebildet ist und zwei umlaufende Vorsprünge (30, 31) aufweist, deren Abstand zueinander etwa der Wandstärke des Gehäuses (18) entspricht und dass der zweite der Vorsprünge (30) durch die Öffnung (27), in der der Einschalter gesteckt ist, durchsteckbar ist.

4. Einrichtung nach Anspruch 3, **dadurch gekennzeichnet, dass** der Einschalter (21) keine Ausschaltfunktion besitzt.

5. Einrichtung nach einem der Ansprüche 1 bis 4, **dadurch gekennzeichnet, dass** der Einschalter (21) bei Aktivierung nicht den Außenumfang der Schmierstoffabgabeeinrichtung überragt.

6. Einrichtung nach einem der Ansprüche 1 bis 5, **dadurch gekennzeichnet, dass** der Einschalter (21) einem Kontaktmittel in Form einer Sprungkontaktscheibe (23) zugeordnet ist, die im aktivierten Zustand eine konvexe leitfähige Platte (33) aufweist, die bei Aktivierung des Einschalters in eine konkave Form gedrückt wird und dabei die so geformte Platte (33) zwei nebeneinanderliegende Kontakte gleichzeitig berührt.

7. Einrichtung nach einem der Ansprüche 1 bis 6, **dadurch gekennzeichnet, dass** der Mikroprozessor einen Signaleingang aufweist. über welchen Steuersignale zur Einschaltung der Schmierstoffabgabe von der zu schmierenden Einheit zuführbar sind.

8. Einrichtung nach Anspruch 7, **dadurch gekennzeichnet, dass** die Zylinderwandung wenigstens teilweise aus transparentem Material besteht und längs der Bewegungsrichtung des Kolbens eine Längen-Skalierung (37) in Form alphanumerischer und/oder abstrakter Zeichen aufweist.

9. Einrichtung nach Anspruch 8, **dadurch gekennzeichnet, dass** der Kolben und/oder dem Kolben zugeordnete Dichtungskörper wenigstens teilweise mit einer gut sichtbaren Farbe versehen sind, die die Ablesbarkeit des Kolbenstands im Zylinder unterstützen.

10. Einrichtung nach einem der Ansprüche 1 bis 9, **dadurch gekennzeichnet, dass** die Einrichtung von Winter- auf Sommerbetrieb umschaltbar ist und entsprechende Mengen/Zeit/Voreinstellungen in einem nicht flüchtigen Speicher (ROM) gespeichert sind.

11. Einrichtung nach einem der Ansprüche 6 bis 10, **dadurch gekennzeichnet, dass** die Sprungkontaktscheibe (23) auf einer Platine (20) zusammen mit dem Mikroprozessor angeordnet ist.

12. Einrichtung nach einem der Ansprüche 1 bis 11, **dadurch gekennzeichnet, dass** der Antrieb einen Schrittmotor aufweist und mit einer Steuer-AuswerteEinheit (54) verbunden ist, welche Steuersignale von einem Steuersignalgeber (53) erhält und die Anzahl der an den elektromotorischen Antrieb abgegebenen Steuersignale mit der Anzahl der max. möglichen Schrittsignale bzw. Umdrehungssignale des elektromotorischen Antriebs vergleicht und im Falle, dass die Anzahl der an den elektromotorischen Antrieb abgegebenen Steuersignale wenigstens so groß ist wie eine vorgegebene Anzahl von Steuersignalen, den elektromotorischen Antrieb (55) abschaltet.

13. Einrichtung nach Anspruch 12, **dadurch gekennzeichnet, dass** die Schmierstaffabgabeeinrichtung eine Anzeigeeinheit (50) aufweist, die mit der Steuer-Auswerte-Einheit (54) verbunden ist und von dort eine numerische Information und/oder symbolische Maßinformation über die Zahl der an den elektromotorischen Antrieb abgegebenen Steuerimpulse und/oder die max. Anzahl der abzugebenen Steuerimpulse anzeigt.

14. Einrichtung nach einem der Ansprüche 1 bis 12, **dadurch gekennzeichnet, dass** der Antrieb einen Gleichstrommotor aufweist und dass das Vergleichsmittel Teil einer Steuer-Auswerte-Einheit ist, welche den Antrieb abschaltet, wenn die Zahl der gezählten Signalimpulse die vorgegebene Wertzahl erreicht.

15. Einrichtung nach Anspruch 1, **dadurch gekennzeichnet, dass** die Schmierstoffabgabeeinrichtung Mittel zur berührungslosen Aktivierung und Deaktivierung der Steuerung bzw. des Antriebs aufweist, wobei diese Mittel aus einem innerhalb des Gehäuses (18) angeordneten Magnetschalter einerseits und andererseits aus einer den Magnetschalter anregenden Einheit, z. B. einer Spule, die außerhalb des Gehäuses angeordnet ist, besteht.

16. Einrichtung nach Anspruch 15, **dadurch gekennzeichnet, dass** die Anregungseinheit des Magnetschalters innerhalb der äußeren Kontur des Gehäuses (18) liegt und mit der zu schmierenden Einheit elektromagnetisch gekoppelt ist.

## Claims

1. A device for automatic lubricant delivery with
- a piston (3) arranged in a cylinder (4)
- an electric-motor drive means (1) which is connected to the piston (3) and which is arranged in a housing (18) adjoining the cylinder (4),
- a microprocessor and a memory (RAM, ROM) connected thereto,
- detection means for the indirect or direct detection of the forward feed movement of the piston and/or the movement of the electromechanical drive, and
- an on switch (21) which is situated in an opening (27) in the housing (18),
wherein the on switch provides protection from water spray and/or explosion and, in the switched-on state, its outline is situated in a depression (22) in the lubricant-delivery device, wherein the microprocessor is capable of being pre-set to a given quantitative delivery per period of time which is capable of being triggered by the on switch (21), wherein the detection means, during the forward feed movement of the piston or during the operation of the drive, emit signal pulses which are fed to a counting device, and wherein comparison means are provided which compare the number of the counted signal pulses with a pre-determined stored value number.

2. A device according to Claim 1, **characterized in that** the on switch (21) has sealing means (29) which prevent media from penetrating into or issuing from the device.

3. A device according to Claim 1 or 2, **characterized in that** the on switch is cylindrical in shape and has two peripheral projections (30, 31), of which the spacing relative to each other corresponds approximately to the wall thickness of the housing (18), and the second of the projections (30) is capable of being passed through the opening (27) in which the on switch is fitted.

4. A device according to Claim 3, **characterized in that** the on switch (21) does not have a switch-off function.

5. A device according to one of Claims 1 to 4, **characterized in that,** when activated, the on switch (21) does not project beyond the external periphery of the lubricant-delivery device.

6. A device according to one of Claims 1 to 5, **characterized in that** the on switch (21) is associated with a contact means in the form of a snap-contact disc (23) which, in the activated state, has a convex conductive plate (33) which upon activation of the on switch is pressed into a concave shape and, in this case, the plate (33) which is shaped in this way simultaneously touches two mutually juxtaposed contacts.

7. A device according to one of Claims 1 to 6, **characterized in that** the microprocessor has a signal input, by way of which control signals for switching on the lubricant delivery can be supplied from the unit to be lubricated.

8. A device according to Claim 7, **characterized in that** the cylinder wall consists at least in part of transparent material and, along the direction of movement of the piston, it has a length scale (37) in the form of alphanumeric and/or abstract characters.

9. A device according to Claim 8, **characterized in that** the piston and/or sealing members associated with the piston are provided at least in part with a clearly visible colour to assist readability of the position of the piston in the cylinder.

10. A device according to one of Claims 1 to 9, **characterized in that** the device can be switched over from a winter mode of operation to a summer mode of operation and suitable quantity / time / pre-settings are stored in a non-volatile memory (ROM).

11. A device according to one of Claims 6 to 10, **characterized in that** the snap-contact disc (23) is arranged on a board (20) together with the microprocessor.

12. A device according to one of Claims 1 to 11, **characterized in that** the drive comprises a stepping motor and is connected to a control / evaluation unit (54) which receives control signals from a control-signal generator (53) and compares the number of the control signals delivered to the electric-motor drive with the number of the maximum possible stepping signals or revolution signals respectively of the electric-motor drive, and, in the event that the number of the control signals delivered to the electric-motor drive is at least as great as a pre-determined number of control signals, it switches off the electric-motor drive (55).

13. A device according to Claim 12, **characterized in that** the lubricant-delivery device has a display unit (50) which is connected to the control / evaluation unit (54) and from there displays numerical information and/or symbolic measurement information about the number of the control pulses delivered to the electric-motor drive and/or the maximum number of control pulses to be delivered.

14. A device according to one of Claims 1 to 12, **characterized in that** the drive comprises a direct-current motor, and the comparison means is part of a control / evaluation unit which switches off the drive when the number of the counted signal pulses reaches the pre-determined value number.

15. A device according to Claim 1, **characterized in that** the lubricant-delivery device comprises means for the contact-less activation and de-activation of the control or the drive respectively, wherein the said means comprise on the one hand a magnetic switch which is arranged inside the housing (18) and on the other hand a unit which excites the magnetic switch, for example a coil, which is arranged outside the housing.

16. A device according to Claim 15, **characterized in that** the excitation unit of the magnetic switch is situated inside the external contour of the housing (18) and is coupled electromagnetically to the unit to be lubricated.

## Revendications

1. Dispositif de distribution automatique de lubrifiant comprenant
un piston (3) disposé dans un cylindre (4),
un mécanisme d'entraînement électromoteur (1) relié au piston (3), disposé dans un carter (18) raccordé au cylindre (4),
un microprocesseur ainsi qu'une mémoire (RAM, ROM) reliée à celui-ci,
des moyens de détection pour la détection directe ou indirecte de l'avancement du piston et/ou du mouvement du mécanisme d'entraînement électromoteur et,
un contacteur (21) qui est disposé dans une ouverture (27) du carter (18),
dans lequel le contacteur offre une protection contre les projections d'eau et/ou les explosions et, à l'état d'enclenchement, son contour se trouve dans une cavité (22) du dispositif de distribution de lubrifiant, dans lequel le microprocesseur peut être préréglé sur une indication de quantité qui est déterminée en fonction du temps et peut être déclenchée par le contacteur (21), dans lequel les moyens de détection lors de l'avancement du piston ou lors du fonctionnement du mécanisme d'entraînement génèrent des impulsions de signal qui sont amenées à un compteur d'impulsions, et dans lequel sont prévus des moyens de comparaison qui comparent le nombre des impulsions de signal comptées avec une valeur indicative prédéfinie et mémorisée.

2. Dispositif selon la revendication 1, **caractérisé en ce que** le contacteur (21) présente des moyens d'étanchéité (29) qui empêchent la pénétration ou l'évacuation de fluides dans le ou hors du dispositif.

3. Dispositif selon la revendication 1 ou 2, **caractérisé en ce que** le contacteur (21) est réalisé en forme de cylindre et présente deux éléments formant saillie (30, 31) périphériques dont la distance l'un par rapport à l'autre correspond à peu près à l'épaisseur de paroi du carter (18) et **en ce que** le second des éléments formant saillie (30) peut être enfoncé à travers l'ouverture (27) dans laquelle le contacteur est introduit.

4. Dispositif selon la revendication 3, **caractérisé en ce que** le contacteur (21) ne présente pas de fonction d'interruption.

5. Dispositif selon l'une quelconque des revendications 1 à 4, **caractérisé en ce que** le contacteur (21) ne dépasse pas, lors de l'activation, le contour extérieur du dispositif de distribution de lubrifiant.

6. Dispositif selon l'une des revendications 1 à 5, **caractérisé en ce que** le contacteur (21) est coordonné à un moyen de contact ayant la forme d'un disque de contact à déclic (23) qui, à l'état activé, présente une plaque (33) convexe conductrice qui, lors de l'activation du contacteur, est serrée dans une forme concave et à cette occasion, la plaque (33) ainsi formée touche simultanément deux contacts juxtaposés.

7. Dispositif selon l'une des revendications 1 à 6, **caractérisé en ce que** le microprocesseur comprend une entrée de signal par l'intermédiaire de laquelle des signaux de commande permettant d'enclencher la distribution de lubrifiant peuvent être amenés depuis l'unité à graisser.

8. Dispositif selon la revendication 7, **caractérisé en ce que** la paroi du cylindre est réalisée au moins en partie dans une matière transparente et, le long du sens de déplacement du piston, présente une graduation sur la longueur (37) sous forme de caractères alphanumériques et/ou abstraits.

9. Dispositif selon la revendication 8, **caractérisé en ce que** le piston et/ou le corps d'étanchéité affecté au piston sont dotés au moins en partie d'une couleur bien visible qui permette la lisibilité de l'état du piston dans le cylindre.

10. Dispositif selon l'une des revendications 1 à 9, **caractérisé en ce que** le dispositif peut être commuté du fonctionnement d'hiver à celui d'été et **en ce que** des quantités/temps/préréglages correspondants sont mémorisés dans une mémoire (ROM) non volatile.

11. Dispositif selon l'une des revendications 6 à 10, **caractérisé en ce que** le disque de contact à déclic (23) est disposé sur une platine (20) en même temps que le microprocesseur.

12. Dispositif selon l'une des revendications 1 à 11, **caractérisé en ce que** le mécanisme d'entraînement comprend un moteur pas à pas, et est relié à une unité de commande (54) qui reçoit des signaux de commande d'un générateur de signal de commande (53), compare le nombre de signaux de commande envoyés au mécanisme d'entraînement électromoteur avec le nombre maximum possible de signaux intermittents ou de signaux de rotation du mécanisme d'entraînement électromoteur et qui, dans le cas où le nombre de signaux de commande envoyés au mécanisme d'entraînement électromoteur est au moins aussi important qu'un nombre prédéfini de signaux de commande, arrête le mécanisme d'entraînement électromoteur (55).

13. Dispositif selon la revendication 12, **caractérisé en ce que** le dispositif de distribution de lubrifiant présente une unité d'affichage (50) qui est reliée à l'unité de commande (54) et, à partir de là, affiche une information numérique et/ou une information de mesure symbolique sur le nombre d'impulsions de commande envoyées au mécanisme d'entraînement électromoteur et/ou le nombre maximum d'impulsions de commande devant être envoyées.

14. Dispositif selon l'une des revendications 1 à 12, **caractérisé en ce que** le mécanisme d'entraînement comprend un moteur à courant continu, et **en ce que** le moyen de comparaison est un élément d'une unité d'analyse et de commande qui met en marche le mécanisme d'entraînement quand le nombre d'impulsions de signal comptées atteint la valeur indicative prédéfinie.

15. Dispositif selon la revendication 1, **caractérisé en ce que** le dispositif de distribution de lubrifiant présente des moyens pour activer et désactiver sans contact la commande respectivement le mécanisme d'entraînement, moyennant quoi ces moyens se composent d'une part d'un commutateur magnétique qui est disposé à l'intérieur du carter (18), et d'autre part d'une unité excitant le commutateur magnétique, par exemple une bobine disposée à l'extérieur du carter.

16. Dispositif selon la revendication 15, **caractérisé en ce que** l'unité d'excitation du commutateur magnétique se trouve à l'intérieur du contour extérieur du carter (18) et est couplée, sous une forme électromagnétique, avec l'unité à graisser.
